# EUROPEAN PATENT APPLICATION

(11) **EP 4 804 524 A1**
(43) Date of publication of application: **09.09.2026**
(21) Application number: 25305310.2
(22) Date of filing: 07.03.2025
(51) Int. Cl.: H04N 19/30, G06N 3/045, G06N 3/047, G06N 3/082, G06N 3/084, H04N 19/44, H04N 19/463, H04N 19/467, H04N 19/85

(54) **VALUE PROPAGATION IN LATENT GRID LEVELS FOR HYBRID INR MODEL**

(71) Applicant: InterDigital CE Patent Holdings, SAS, 75017 Paris (FR)
(72) Inventor: SCHNITZLER, Francois, 56890 SAINT AVE (FR); LO BIANCO, Federico, 35700 RENNES (FR); GALPIN, Franck, 35235 THORIGNE-FOUILLARD (FR)
(74) Representative: Interdigital

(57) **Abstract**

A method and device for encoding and decoding video data is based on hybrid INR models using hierarchical grid levels of latent variables, from coarse to fine levels, wherein a value of a latent variable of a coarser level may be propagated to a finer level under the condition that its value is equal to or close to the most frequent value. The most frequent value may be equal to zero. The most frequent value may be transmitted in the bitstream. The propagation may be constrained by having a neighborhood of the latent variable of the coarser level respecting the same condition.

## Description

### TECHNICAL FIELD

At least one of the present embodiments generally relates to a method and a device for encoding and decoding data and particularly to value propagation in latent grid levels for hybrid implicit neural representation model.

### BACKGROUND ART

An implicit neural representation (INR) network is a neural network that is trained to represent a specific signal; the INR network is trained to predict a sample value of the signal when presented with the sample's spatial coordinates. A hybrid INR model improves the INR network's capability to learn local patterns of the signal. To that end, sample coordinates of the signal are first mapped into latent variables and the INR network is trained to represent the signal based on these latent variables. When the hybrid INR model is applied to signal compression, the latent variables represent the signal in the bitstream. To efficiently entropy code the latent variables, their respective distributions should be used. Current approaches estimate the latent variables' respective distributions based on context. The manner in which such context is constructed is instrumental in exploiting spatial and temporal redundancies across the latent variables.

### SUMMARY

According to an aspect of at least one embodiment, an encoding method comprises training an implicit neural representation network model, encoding, in video data, parameters of the implicit neural representation network, encoding, in video data, values of latent variables of a coarsest grid level of a hierarchical grid of latent variables for the implicit neural representation network, iterating over grid levels of finer levels than the coarsest grid level and, for an iterated grid level, when a difference between a value of a corresponding latent variable of the coarser grid level and a most frequent value is greater than a threshold, determining that values of the corresponding latent variables of the iterated grid level must be encoded and encoding, in video data, values of latent variables of the iterated grid level, and producing a video data comprising the parameters of the implicit neural representation network and the determined values of the latent variables for the grid levels.

According to an aspect of at least one embodiment, a decoding method comprises decoding, from video data, values of latent variables of the coarsest grid level of a hierarchical grid of latent variables for an implicit neural representation network, iterating over grid levels of finer levels than the coarsest grid level and, for an iterated grid level, iterating over latent variables of the iterated grid level, and for a latent variable of the iterated level, when a difference between value of a latent variable of the coarser grid level that hierarchically corresponds to the iterated latent variable and a most frequent value is smaller than or equal to a threshold value, propagating the most frequent value to the corresponding latent variables of the iterated grid level, when the difference between the value of the latent variable of the coarser grid level that hierarchically corresponds to the iterated latent variable and the most frequent value is greater than the threshold value, decoding from video data values of the corresponding latent variables of the iterated grid level, decoding from video data values of the corresponding latent variables of the iterated grid level, and producing a reconstructed data using the implicit neural representation network and determined values of the latent variables.

According to an aspect of at least one embodiment, an encoding apparatus comprises a processor configured to train an implicit neural representation network model, encode, in video data, parameters of the implicit neural representation network, encode, in video data, values of latent variables of a coarsest grid level of a hierarchical grid of latent variables for the implicit neural representation network, iterate over grid levels of finer levels than the coarsest grid level and, for an iterated grid level, when a difference between a value of a corresponding latent variable of the coarser grid level and a most frequent value is greater than a threshold, determine that values of the corresponding latent variables of the iterated grid level must be encoded and encode, in video data, values of latent variables of the iterated grid level, and produce a video data comprising the parameters of the implicit neural representation network and the determined values of the latent variables for the grid levels.

According to an aspect of at least one embodiment, a decoding apparatus comprises a processor configured to decode, from video data, values of latent variables of the coarsest grid level of a hierarchical grid of latent variables for an implicit neural representation network, iterate over grid levels of finer levels than the coarsest grid level and, for an iterated grid level, iterate over latent variables of the iterated grid level, and for a latent variable of the iterated level, when a difference between value of a latent variable of the coarser grid level that hierarchically corresponds to the iterated latent variable and a most frequent value is smaller than or equal to a threshold value, propagate the most frequent value to the corresponding latent variables of the iterated grid level, when the difference between the value of the latent variable of the coarser grid level that hierarchically corresponds to the iterated latent variable and the most frequent value is greater than the threshold value, decoding from video data values of the corresponding latent variables of the iterated grid level, decode from video data values of the corresponding latent variables of the iterated grid level, and produce a reconstructed data using the implicit neural representation network and determined values of the latent variables.

One or more of the present embodiments also provide a computer readable storage medium having stored thereon instructions for performing at least part of any of the methods described above. One or more embodiments also provide a computer program product including instructions for performing at least part of any of the methods described above.

Embodiments are described within the context of 2D image compression but also apply to many other signals, such as 2D video, 3D scenes and objects or haptic signals. Furthermore, these approaches have a far lower computational complexity than end-to-end neural compression approaches.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF SUMMARY OF THE DRAWINGS

The present disclosure may be better understood by consideration of the detailed description below in conjunction with the accompanying figures in which:
Figure 1 is a block diagram of an example system, according to which aspects of the present embodiments can be implemented.
Figure 2 is a diagram illustrating an example INR network.
Figure 3 is a block diagram of an example video encoder.
Figure 4 is a block diagram of an example video decoder.
Figure 5 is a diagram illustrating a hybrid INR model.
Figure 6 is a block diagram illustrating an example video encoder applying a hybrid INR model.
Figure 7 is a block diagram illustrating an example video decoder applying a hybrid INR model.
Figure 8 is a diagram illustrating prediction of a latent variable distribution, using a spatial context.
Figure 9 is a block diagram illustrating an example video encoder applying a predictive hybrid INR model.
Figure 10 is a block diagram illustrating an example video decoder applying a predictive hybrid INR model.
Figure 11 illustrates an example of 3-levels latent grids for a hybrid INR according to the first embodiment.
Figure 12 illustrates examples of neighborhood and latent grids for a hybrid INR according to the third embodiment.
Figure 13 illustrates an example process for encoding data based on a hybrid INR modelusing latent value propagation according to embodiments.
Figure 14 illustrates an example process for decoding data based on a hybrid INR modelusing latent value propagation according to embodiments.
Figure 15 illustrates an example process for decoding data based on a hybrid INR network using zero value propagation according to an embodiment based on the COOL-CHIC algorithm.

It should be understood that the drawings are for purposes of illustrating examples of various aspects, features and embodiments in accordance with the present disclosure and are not necessarily the only possible configurations.

### DETAILED DESCRIPTION

Embodiments described hereafter are related to hybrid INR models using hierarchical grid levels of latent variables, from coarse to fine levels, wherein a value of a latent variable of a coarser level may be propagated to a finer level under the condition that its value is equal to or close to the most frequent value. The most frequent value may be equal to zero. The most frequent value may be transmitted in the bitstream. The propagation may be constrained by having a neighborhood of the latent variable of the coarser level respecting the same condition.

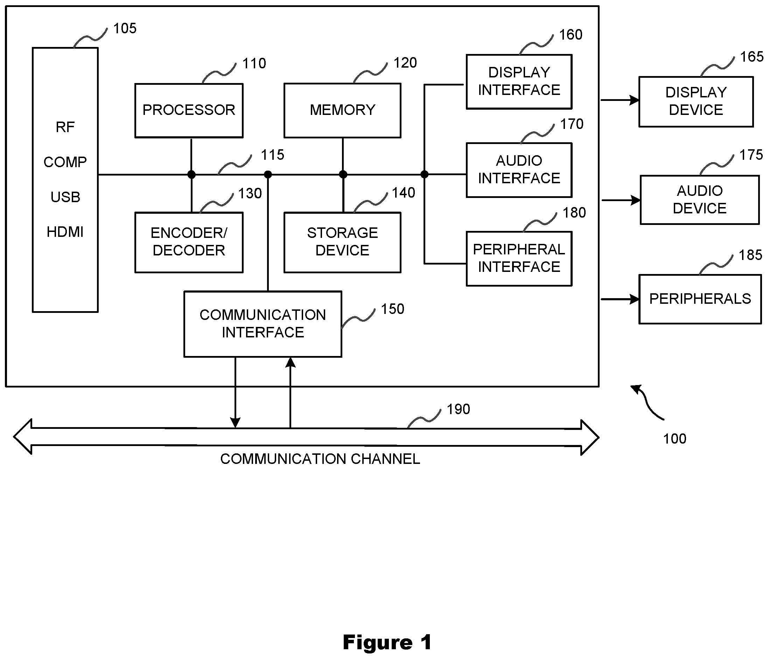

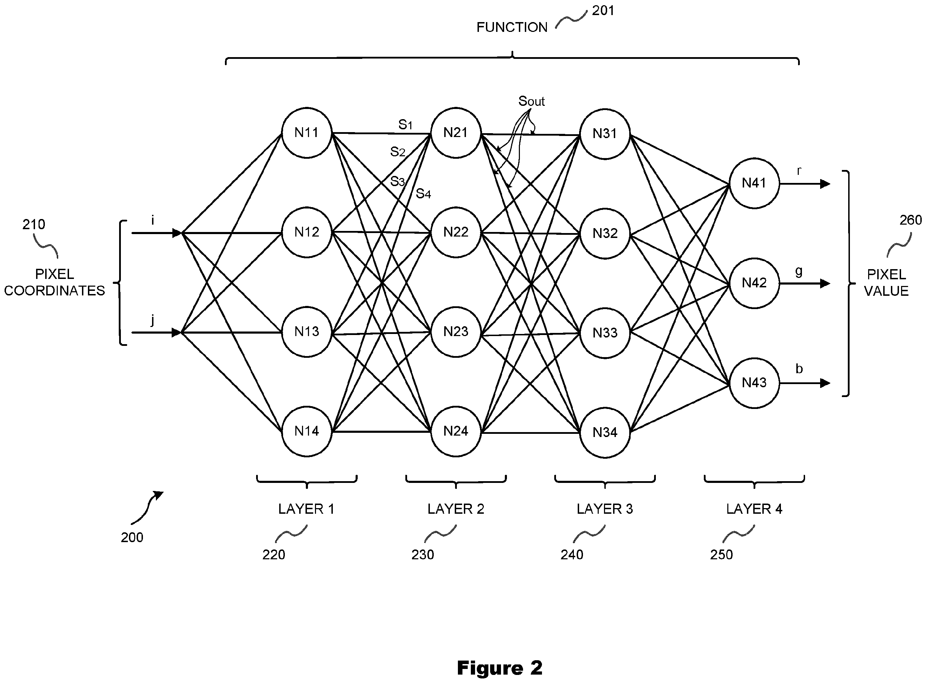

A system for encoding and decoding multimedia content (e.g. images, videos, 3D objects or haptic signals), with which various aspects and examples described herein may be implemented, is generally described in reference to Figure 1, followed by a description of the aspects of the present disclosure in reference to Figures 2 to 14.

**Figure 1** is a block diagram of an example system, according to which aspects of the present embodiments can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., 12C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although Figure 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Generally, video codecs can be classified into conventional codecs, autoencoders, and overfitted codecs. Conventional codecs, currently the most common ones, are based on predictive coding, such as those following the advance video coding (H.264/AVC), the high efficiency video coding (HEVC), or the versatile video coding (VVC) standards. On the other hand, an autoencoder is a neural network that is trained to map input images (video frames) into respective sets of latent variables and then map back the sets of latent variables to approximated versions of the input images. During training, the autoencoder parameters are optimized to minimize a rate-distortion cost function. Thus, using the trained autoencoder, encoding an image involves mapping the image into a set of latent variables and decoding the image involves mapping the set of latent variables into a reconstructed version of the image. Since autoencoders are generically trained (that is, their training is based on a large number of images) to compete with the performance of conventional codecs, for example, their complexity (the number of parameters and multiplications involved per pixel) is high. Relative to autoencoders, overfitted codecs, using INR networks, offer lower complexity while still achieving the performance levels of conventional codecs.

Representing data via INR networks is a relatively new technology that has only recently been investigated by the computer vision and computer graphics communities. INR networks are studied for the applications of compression, where an efficient representation of signals (such as, still images, videos, surfaces, and volumes) is required. In contrast to an autoencoder, an INR network is trained to represent a specific signal. Hence, unlike autoencoders, an INR-based codec is not generic but is adapted (overfitted) to the signal to be coded and is, therefore, more efficient. Moreover, since the INR network is trained to predict a signal based on the signal's coordinates, the trained network can be applied to progressively reconstruct the signal based on any set of coordinates (e.g., a subset of the coordinates used in the training, or any other set of extrapolated or interpolated coordinates therefrom). For simplicity of the presentation, aspects of INR network applications are described herein with respect to images (e.g., video frames); however, these aspects are extendable to other data frames, such as those representing surfaces of objects and volumetric data that may be changing overtime.

**Figure** 2 is a diagram illustrating an example INR network. In such context, an INR network 200 parameterizes a signal as a function 201, which takes coordinates 210 as input and outputs values 260 of a signal at these coordinates. INR networks have recently been applied to image, videos, 3D objects or haptic signals among other applications. In such context, the inputs 210 can be pixel coordinates (*c*₁*, c*₂) and the INR may output 260 the color values *(r, g, b)* or *(y, u, v)* of the input pixel. The input coordinates may be modified by a transformation before being used as input for the neural network. This transformation can be a Fourier mapping, coordinate transformation, normalization etc. The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

An INR network is for example a neural network composed of multiple layers, each layer includes multiple nodes (denoted by circles). Generally, the architecture of a neural network is characterized by the number of layers, the number of layers' nodes, and by the way the layers' nodes are connected. In the example of Figure 2, the network 200 has four layers 220, 230, 240, 250 that are fully connected. For example, the first layer 220 includes four nodes N11, N12, N13, and N14 that each receives the coordinate values (*c*₁*, c*₂) 210 of a pixel x and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel x, respectively, r, *g,* and b (or color component values of any other color model, such as *y,* u, and *v*). Each node in the network 200 represents an operator that generates an output signal based on the node's inputs. For example, node N21 of the second layer 230 receives as an input the output signals of nodes N11, N12, N13, and N14, respectively, *s*₁, *s*₂, *s*₃, and *s*₄. These inputs are translated into an output signal *sₒᵤₜ* that feeds the nodes of the third layer 240. A node's operator can be expressed as follows: ${s}_{out} = A \left({p}_{0}+{\sum }_{i = 1}^{L} {p}_{i} ⋅ {s}_{i}\right) ,$ where, L denotes the number of input signals (i.e., the number of nodes from the previous layer that connect to the node), *s* = {*sᵢ* : *i* = *1 to L}* denotes the node's input signal vector, *sₒᵤₜ* denotes the node's output signal, p = {*pᵢ* : *i =* 0 *to L}* denotes the node's parameter vector (or weight vector), and *A* denotes an activation function (e.g., ReLU, Sigmoid, or Tanh). Each neural layer can be described as a function that first multiplies the input by a tensor, adds a vector called the bias and then applies a nonlinear function on the resulting values. The shape (and other characteristics) of the tensor and the type of non-linear functions are called the architecture of the network. We will denote the values of the tensor and the bias by the term "weights". The weights (and parameters of the activation functions, if such parameters exist) of respective nodes are collectively referred to as the parameters *θ* of the network 200. These parameters *θ* are determined through a training process. The network operation, denoted by *f_{g},* is therefore defined by the network parameters *Θ*. Once the parameters are learned, they may be encoded to create a bitstream allowing to reconstruct the input signal.

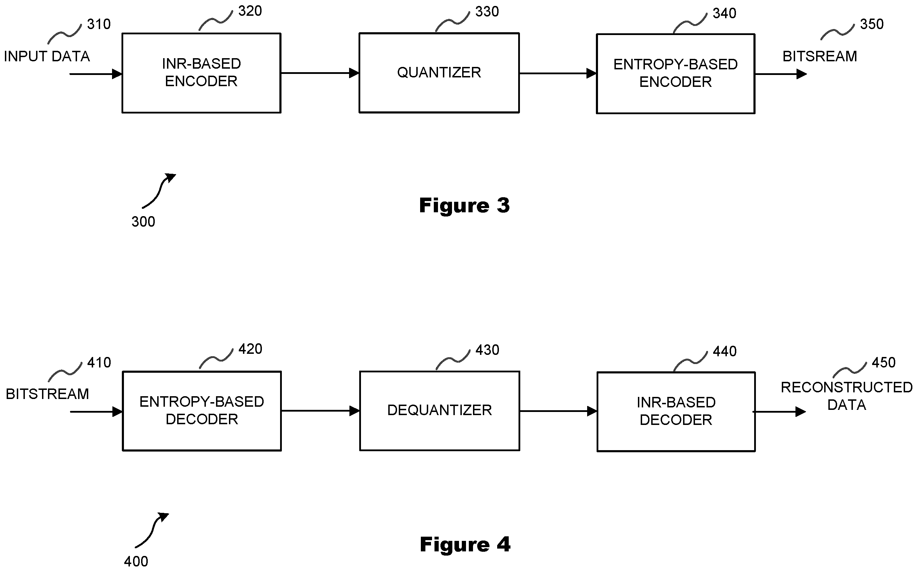

Hence, an INR network 200 is trained to predict a pixel value of an image, *x(i,j),* based on the pixel's coordinates (*i*, *j*) - that is, *f*_{θ}(*i*, *j*) = *(r, g, b)* (or *f*_{θ}(*i*, *j*) = *(y, u, v)).* During a training phase of an INR network 200, the parameters *θ* (or a subset of them) are determined. This is done via an optimization process through which the parameters *θ* that minimize a loss function can be determined. For example, for an image x of size *(M* × *N),* the following cost function can be used: $Cost = D \left(x, {f}_{θ}\right) + λR \left(θ\right)$ where, D is a distortion measure, measuring the fidelity of the estimated pixel values, provided by *f*_{θ}*,* relative to the ground truth, that is, the corresponding pixel values from the original image, denoted by *x, R is* the resulting bitrate of the encoded parameters *θ* (e.g., encoded by quantization and entropy coding as discussed with respect to Figure 3) and *λ* is a trade-off parameter that can be set to determine the balance between D and R. Note that the distortion measure D can be any metric that measure the distance (or similarity) between the original image x and its estimated version provided by *f*_{θ}*,* such as a mean squared error metric or a learned perceptual image patch similarity (LPIPS) metric. For example, a mean squared error metric can be expressed as: ${D}_{MSE} = \frac{1}{WH} {\sum }_{i ∈ W , j ∈ H} {\left(x\left(i, j\right)-{f}_{θ}\left(i, j\right)\right)}^{2} ,$ where, *N* and *M* are the width and height of the image x that the INR network is trained to predict. The optimization of the network parameters *θ*, according to equation (2), is typically performed by a machine learning optimization technique, applying, for example, a batch gradient descent algorithm. Following the training of the INR network 200 and using the optimal parameters *θ* (obtained via the optimization process), the INR network can be applied to predict a pixel value based on its corresponding coordinate values.

To decompress the signal, *f*_{θ} is evaluated at all relevant coordinates. These coordinates can be selected at decoding. A typical choice would be all pixel coordinates for an image or video. As an example, for a 256x256 pixel image, these coordinates could be all pairs (*i, j* ) for *all i* ∈ 0,1,...,255 and *j* ∈ 0,1, ...,255. Other choices are possible, for example to upsample, downsample or extend the original image.

The bitstream encoding a signal is thus created by encoding the parameters of the neural network. This is typically done by a neural compression codec such as Neural Network Coding (NNC)/ ISO/IEC 15938-17 or MPEG-7 part 17 or simply by quantizing the parameters and/or pruning some neurons from the network and using conventional entropy coding such as arithmetic coding or auto-regressive models.

Using INR networks for the application of encoding and decoding images is further described with respect to Figures 3 and 4.

**Figure** 3 is a block diagram of an example video encoder. In the example of Figure 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function *f*_{θ}*,* representative of the INR network, to determine the optimal network parameters *θ*. For example, for an input image with dimensions W and *H, W* times *H* pairs of pixel coordinates *(i,j)* and corresponding pixel values *x(i,j)* can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded for example using neural compression codecs such as Neural Network Coding (NNC)/ ISO/IEC 15938-17 or MPEG-7 part 17. The bitstream 350 can be used by a decoder to reconstruct the input image 310, as described in reference to Figure 4.

**Figure 4** is a block diagram of an example video decoder. The decoder 400 generally reverses the operation of the encoder 300 of Figure 3. In the example of Figure 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate *f*_{θ} using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions W = 256 by H = 256 based on the corresponding coordinates. At the decoder 400, pixel values of the image can be predicted by evaluating the trained INR network using: 1) the full coordinate set used for training, including all pairs of *i* ∈ 0,1, ...,255 and *j* ∈ 0,1, ...,255; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

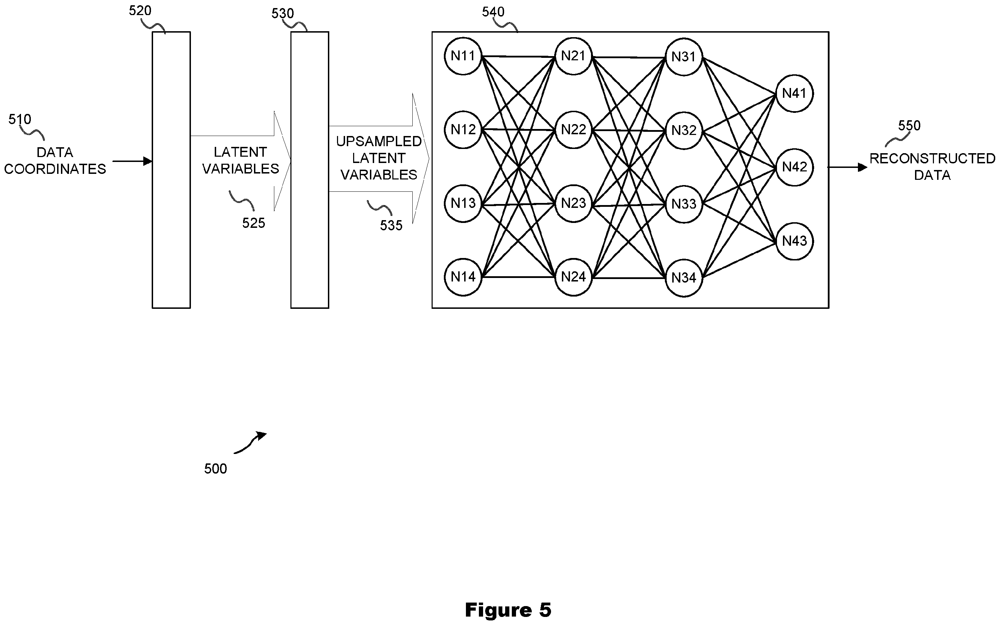

Hybrid INR models have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to Figure 5.

**Figure 5** is a diagram illustrating a hybrid INR model. In an aspect, this hybrid INR model 500 can be applied by the INR-based encoder 320 of Figure 3 and the INR-based decoder 440 of Figure 4. In the example of Figure 5, during the encoding of input data (that is, the training of the model 500), the input data's coordinates 510 are first mapped, by a mapping unit 520, into respective latent variables 525, i.e., vector of latent features. The mapping can be implemented for example by a lookup table, a partition of the signal, a hash function and/or a linear combination of features or directly learned these features. The mapping may also involve any transformation, such as a Fourier transformation, a coordinate transformation, a normalization transformation, or a combination thereof. The latent variables 525 may have different resolutions and may need to be upsampled, for example by an up-sampling unit 530, resulting in upsampled latent variables 535. The upsampled latent variables are used as an input to an INR synthesis network 540 (e.g., such as INR network 200), trained to produce the reconstructed data 550. In a hybrid INR model 500 the latent variables 525 are trained together with the parameters *θ* of the INR network 540, resulting in optimal network parameters and optimal latent variables. Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR model 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

In hybrid INR models, the latent variables, denoted by y, are typically the largest contributor to the bitstream size (several orders of magnitude larger than that contributed by the INR network parameters). One approach to reduce the transmission cost of these latent variables is to entropy code these variables based on their learned distributions.

The attention given to the entropy coding of the latent features appears on the new formulation of the loss function: ${min}_{\left(\hat{y}, θ, ψ\right)} D \left(x,{f}_{θ}\left(upsample\left(\hat{y}\right)\right)\right) - λ {log}_{2} {p}_{ψ} \left(\hat{y}\right) ,$ where *ŷ* is the quantized latent and *p*_{ψ} (ŷ) is the discrete distribution over the quantized latent features. The distribution of these latent features can for example be a known distribution or estimated using an auto regressive probability model.

According to Equation (4), minimizing the rate associated to the transmission of the compressed version of the frame relies on minimizing the rate associated to the latent features. This can be achieved by reducing the amount of information contained in the latent features risking a poor reconstruction of the sent frame and an increase of distortion in *x̂=f_{θ} ("upsample"* (*ŷ* )). **In** other words, less information in *ŷ* results in more distortion in *x̂*. It may also be achieved by estimating the distribution of the sent latent as close as possible to the real (unknown) one using a well-chosen probability model. **If** that probability model is trained, it must be included in the bitstream.

Due to its high dimension the modeling of the joint distribution of *ŷ* is usually untrackable. Instead it is typical to factorize *p*_{ψ} (*ŷ*) and use a set of C context latents ${c}_{ijk}^{s}$ such that the distribution of each quantized latent $\hat{{y}_{ijk}}$ is conditioned on C spatially neighboring latents that have already been decoded and selected in a way to introduce as little sequentiality as possible to allow parallel decoding of the L channels, for example in a wavefront-like approach. The position of the latent considered must be known by the emitter and the receiver. The factorization of *p*_{ψ} (*ŷ* ) is given by: ${p}_{ψ} \left(\hat{y}\right) = {\prod }_{i , j , k} {p}_{ψ} \left(\hat{{y}_{ijk}}\left|{c}_{ijk}^{s}\right.\right) ,$

Where ${p}_{ψ} \left(\hat{{y}_{ijk}}\left|{c}_{ijk}^{s}\right.\right)$ denotes the conditional probability of one latent value at position (i, j, k) conditioned on its spatial context ${c}_{ijk}^{s}$. (i, j) represents the spatial coordinate and k represents a latent feature.

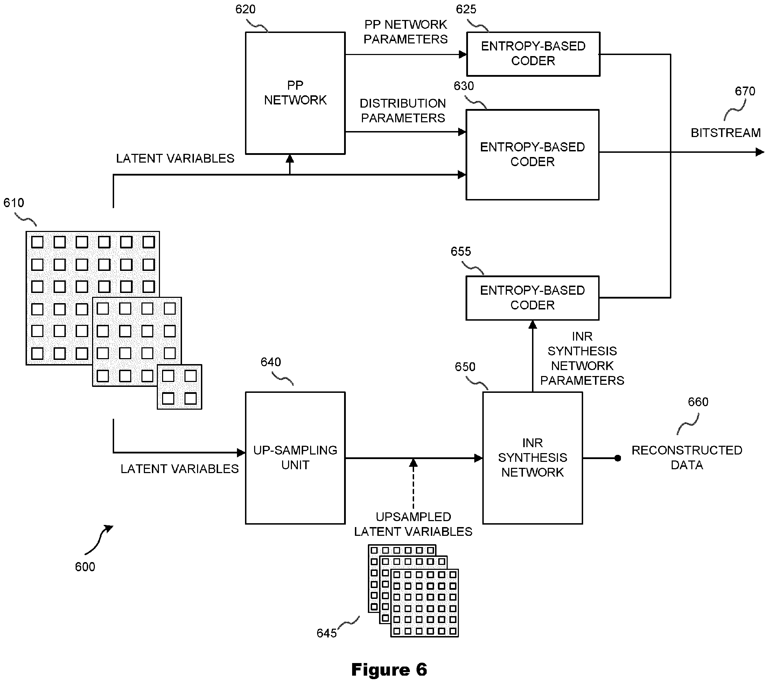

An example of hybrid INR model named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune, the latent variables are arranged in hierarchical layers (or channels) ranging from a low-resolution representation (that provides for compact representation of smooth image regions) to a high-resolution representation (that captures the fine details of the image). Principles of the hybrid INR model proposed in Ladune are described below in reference to Figures 6-7.

**Figure 6** is a block diagram illustrating an example video encoder 600 applying a hybrid INR model. The encoder 600 includes a probability prediction (PP) network 620, an up-sampling unit 640, an INR synthesis network 650, and entropy-based coders 625, 630, 655. The encoder 600 is configured to process latent variables 610 (e.g., latent variables 525 generated by the mapping unit 520 of Figure 5). The encoder 600 up-samples, by the up-sampling unit 640, the latent variables. Based on these upsampled latent variables 645 the INR synthesis network 650 is trained (overfitted) to produce reconstructed data 660 (e.g., a reconstructed image of a video frame). The training results in optimal INR synthesis network parameters *θ* that are coded, by the entropy-based coder 655, into the bitstream 670. In an inference mode, reconstructing the data (e.g., by a decoder 700) involves feeding the trained INR synthesis network, defined by the optimal network parameters *θ*, with the upsampled latent variable. And so, in addition to the network parameters *θ*, the latent variables need to be coded into the bitstream 670. As further explained below, due to their large bit representation, efficient coding of the latent variables calls for the estimation of their distributions. To that end, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by ψ, determined during the training of the PP network 620. The entropy-based coder 625 codes these PP network parameters into the bitstream 670. Note that in the example of Figure 6, while the entropy-based coder 630 that codes the latent variables relies on their learned respective distributions, the other entropy-based coders 625, 655 that code the PP network parameters and the INR synthesis network parameters rely on respective non-learned distributions. In an aspect, for some of the latent variables respective non-learned distributions can be used by the entropy-based coder 630. These non-learned distributions may be fixed distributions or may be distributions that was learned with respect to other latent variables (e.g., latent variables representing data from previous frames).

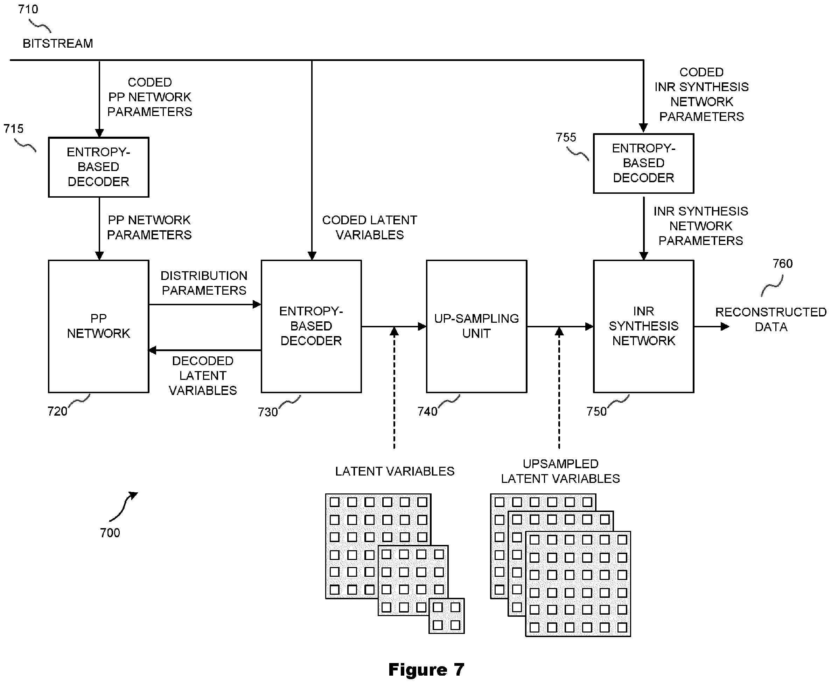

**Figure** 7 is a block diagram illustrating an example video decoder applying a hybrid INR model. The decoder 700 includes a PP network 720, an up-sampling unit 740, an INR synthesis network 750, and entropy-based decoders 715, 730, 755. The PP network 720 produces distribution parameters of respective latent variables. The PP network 720 operates based on learned PP network parameters ψ, determined during the training of the PP network 620. The entropy-based decoder 715 decodes these PP network parameters from the bitstream 710. Based on the produced 720 distribution parameters, the entropy-based decoder 730 decodes the latent variables from the bitstream 710. Already decoded latent variables are provided back to PP network to serve as a context in producing the distribution parameters of the currently decoded latent variable. The decoded latent variables are then upsampled by the up-sampling unit 740 (as performed by the up-sampling unit 640 at the encoder 600). Fed by the up-sampled latent variables, the INR synthesis network 750 reconstructs the data 760 (e.g., a reconstructed image of a video frame) it is trained to synthesize based on the INR synthesis network parameters, decoded from the bitstream 710 by the entropy-based decoder 755.

The operation of the hybrid INR model is further explained with respect to an image x of a video frame, however, x may represent other types of data (such as a surface or a volume) that can be associated with a frame. Note that latent variables representative of data regions (e.g., pixels) from a data frame (e.g., a video frame) referred to herein also as corresponding to that data frame.

As illustrated, the INR synthesis network 650, 750 utilizes a hierarchical representation that includes multiple layers of different spatial resolutions 610. Each layer represents an image *x* with a width W and a height *H* with a corresponding level of detail. Formally, the discrete latent variables, denoted by *ŷ*, can include *K* layers of latent variables: *ŷ =* {*ŷₖ* , *k = 0: (K* - 1)}. Each layer *ŷₖ* is of width W /2*^{k}* and of height *H* /2*^{k}*. During the up-sampling 640, each layer *ŷₖ* may be upsampled by a factor of *2^{k}* (using any interpolation method) to obtain the upsampled layer version, denoted by *ẑₖ*. Together, the upsampled layers, *ẑ =* {*ẑₖ* , *k = 0: (K* - 1)}, result in a dense 3D representation 645 of dimension W by H by K. Thus, the INR network 650 can be trained based on *W* by *H* inputs of *ẑ*(i, j), where each input can include up to *K* latent variables, that is, *ẑ*(i, j) = {*ẑ*(i, j, *k), k* = 0: *(K* - 1))}. For example, the trained INR network 750 can be used to predict a reconstructed pixel ***x̂**(i, j),* of the original pixel *x(i,j),* by ***x̂***(*i, j*) *= f**_{θ}**(ẑ*(*i,* j)). In an aspect, depending on the desired bitrate, not all the layers of the latent variables may be used to represent (code) an image x.

When compressing an image x the goal is to do so while minimizing a cost function, as discussed with respect to equation (2). In the case of a hybrid INR model, the cost of coding an image can be expressed as: $Cost = D \left(x,{f}_{θ}\left(\hat{z}\right)\right) + λR \left(\hat{y}, θ, ψ\right) ,$ where *x* denotes an image to be coded with *H* hight, W width, and V color channels; where *ŷ* denotes the quantized latent variables and *ẑ* denotes their upsampled version; where *f**_{θ}*** denotes the INR synthesis network 650, 750 and *θ* denotes the INR synthesis network parameters; where *f*_{ψ} denotes the PP network 620, 720 and ψ denotes the PP network parameters; where *D* denotes a distortion metric measuring the distance between the image *x* and its reconstructed version ***x̂***, as produced by the INR synthesis network *f**_{θ}*** from the upsampled latent variables *ẑ*, that is, ***x̂*** *= f**_{θ}***(***ẑ***); and where R denotes the rate (in bits per pixel) measuring the number of bits that are required to represent a pixel in a bitstream, that is, the number of bits that are required to represent *ŷ*, *θ*, and ψ. The distortion *D* and the rate R are balanced by a scalar value denoted by *λ*. In a case where the up-sampling unit 640 is implemented by a neural network, the parameters of that network are also learned and coded into the bitstream 670 to be used by the up-sampling unit 740 when used in an inference mode.

The objective, thus, is to find the latent variables *ŷ*, the INR synthesis network parameters *θ*, and the PP network parameters ψ that minimize the coding cost, as follows: ${min}_{\hat{y} , θ , ψ} Cost = {min}_{\hat{y} , θ , ψ} \left(D\left(x,{f}_{θ}\left(\hat{z}\right)\right)+λR\left(\hat{y}, θ, ψ\right)\right) .$

Since the contribution of the INR synthesis network parameters *θ* and the PP network parameters ψ to the rate R is not as significant as that of the latent variables *ŷ*, only the latter can be considered when minimizing the coding cost, that is, *R*(*ŷ, θ*, ψ ) ≈ *R*(*ŷ*)*.* Furthermore, *R*(*ŷ*) can be replaced by the cross entropy. Thus, equation (5) can be replaced by: ${min}_{\hat{y} , θ , ψ} Cost = {min}_{\hat{y} , θ , ψ} \left(D\left(x,{f}_{θ}\left(\hat{z}\right)\right)-λ {log}_{2} {P}_{ψ}\left(\hat{y}\right)\right) ,$ where *P*_{ψ}(*ŷ*) is the joint distribution of the latent variables *ŷ*. According to Equation (6), minimizing the cost involves minimizing the rate associated with the latent variables. This can be achieved by reducing the amount of information contained in the latent variables, at the price of a less accurate reconstruction, as less information in *ŷ* is likely to increase the distortion D. Alternatively, minimizing the cost can be achieved by obtaining estimates of the distributions of the respective latent variables, as described herein.

Due to the high dimensionality of the latent variables, modeling of the joint distribution of *ŷ*, *P*_{ψ}(*ŷ*), is not tractable. Instead, *P*_{ψ}(*ŷ*) can be factorized as follows: ${P}_{ψ} \left(\hat{y}\right) = {\prod }_{i , j , k} {p}_{ψ} \left({\hat{y}}_{ijk}\left|{c}_{ijk}^{s}\right.\right) ,$ where ${p}_{ψ} \left({\hat{y}}_{ijk}\left|{c}_{ijk}^{s}\right.\right)$ denotes a discrete conditional probability of a latent variable at position (i, j, k) conditioned on a corresponding spatial context ${c}_{ijk}^{s}$. Where (i, j) represents the spatial coordinate of a latent variable in a layer k. The spatial context ${c}_{ijk}^{s}$ may be provided by spatially neighboring latent variables that have already been decoded and preferably selected in a way that enables parallel decoding of the different layers of the latent variables (e.g., in a wavefront-like approach).

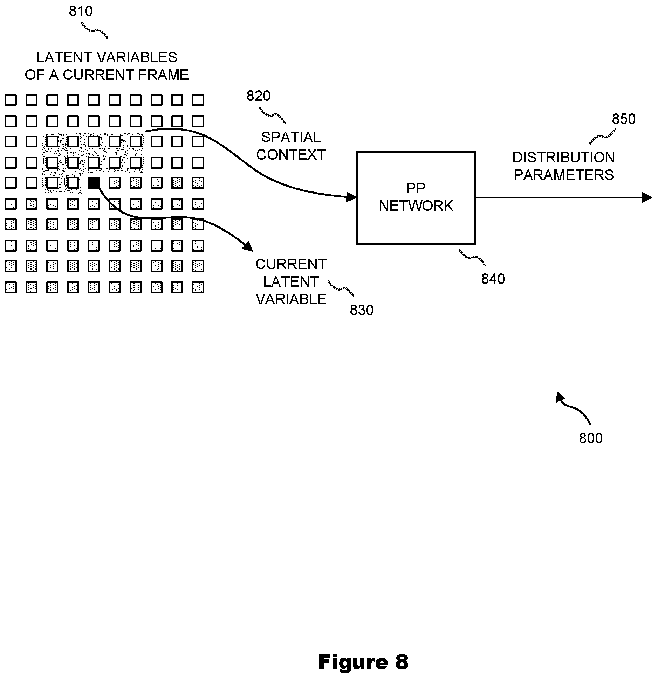

**In** practice, the discrete distribution ${p}_{ψ} \left({\hat{y}}_{ijk}\left|{c}_{ijk}^{s}\right.\right)$ can be modeled by integrating the continuous distribution of the non-quantized latent variable, denoted by *g(y)* and modeled as a Laplacian distribution, for example. Thus, the **PP** network 620 learns the expectation parameter, µᵢⱼₖ, and the scale parameter, σᵢⱼₖ, based on the context ${c}_{ijk}^{s}$. Accordingly, the probability of a latent variable *ŷᵢⱼₖ* can be expressed as: ${p}_{ψ} \left({\hat{y}}_{ijk}\left|{c}_{ijk}\right.\right) = {\int }_{{\hat{y}}_{ijk} - 0.5}^{{\hat{y}}_{ijk} + 0.5} g \left(y\right) dy ,$ where g ≅ (µᵢⱼₖ, σᵢⱼₖ) denotes a Laplacian distribution. Thus, in the case of a Laplacian distribution, for example, given a context cᵢⱼₖ, the PP network 620 can be trained to produce the corresponding distribution parameters, that is, {µᵢⱼₖ, σᵢⱼₖ} = f_{ψ}(cᵢⱼₖ) as described next with respect to Figure 8.

**Figure 8** is a diagram illustrating prediction of a latent variable distribution, using a spatial context 800. For simplicity of the presentation, only one layer of the latent variables 810 is illustrated, however, processes applied to this layer can be similarly applied to the other layers. The example of FIG. 8 illustrates the process of predicting a distribution of a current latent variable (indicated by a black square) to be coded (e.g., by encoder 600 or 900) or to be decoded (e.g., by decoder 700 or 1000). However, when coding the latent variable, typically, neighboring latent variables from the current frame are available. While when decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable at position (*i, j, k),* latent variables can be selected within a neighborhood located relative to position (*i, j, k)* (e.g., latent variables grouped by the gray background in FIG. 8) to form the spatial context ${c}_{ijk}^{s}$. The obtained spatial context, ${c}_{ijk}^{s}$, can then be used by the PP network 840 to predict the distribution of the current latent variable. The distribution of the current latent variable is predicted by estimating the parameters of that distribution (e.g., {µᵢⱼₖ, σᵢⱼₖ}). To that end, in the encoder, the PP network 840 is trained to produce, for each latent variable, the distribution parameters 850 based on the respective spatial context. This training can be done by minimizing the coding cost expressed in equation (6). The training of the PP network 840 results in the PP network parameters ψ. In the decoder, the trained PP network 840 is operated in an inference mode to produce, for each latent variable, the distribution parameters 850 from the respective spatial context. The trained PP network 840 operates based on the PP network parameters ψ determined by the encoder during training and provided to the decoder in the bitstream.

In the case of a video stream, for example, a hybrid INR model can be used to represent each image of a video frame by a set of latent variables, *ŷ*, that (together with the PP network parameters ψ and the INR network parameters θ) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR model applicable to individual frames (see, Leguay et al., Cool-chic video: Learned video coding with 800 parameters, Data Compression Conference (DCC) 2024, IEEE, pp 23-32, 2024, hereinafter "Leguay").

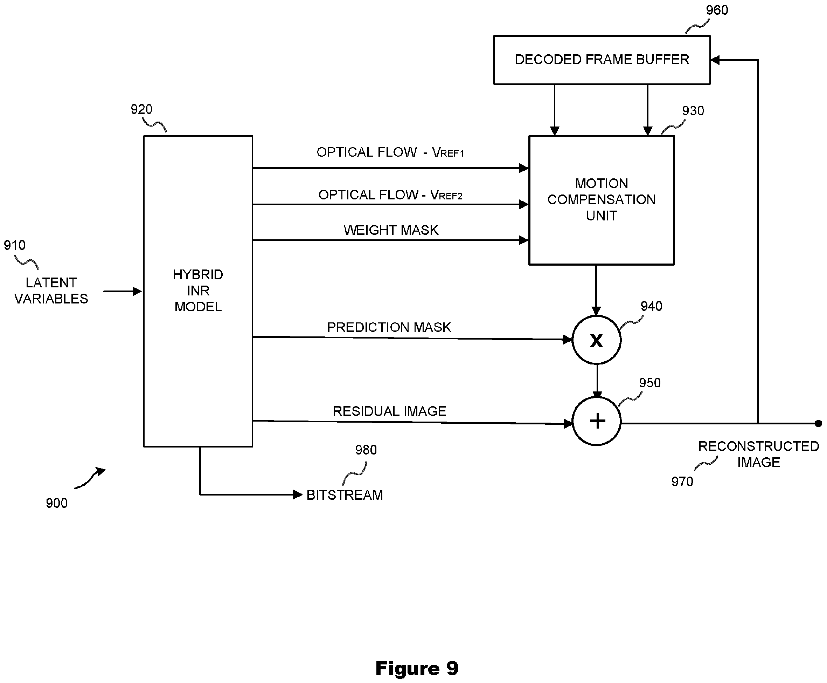

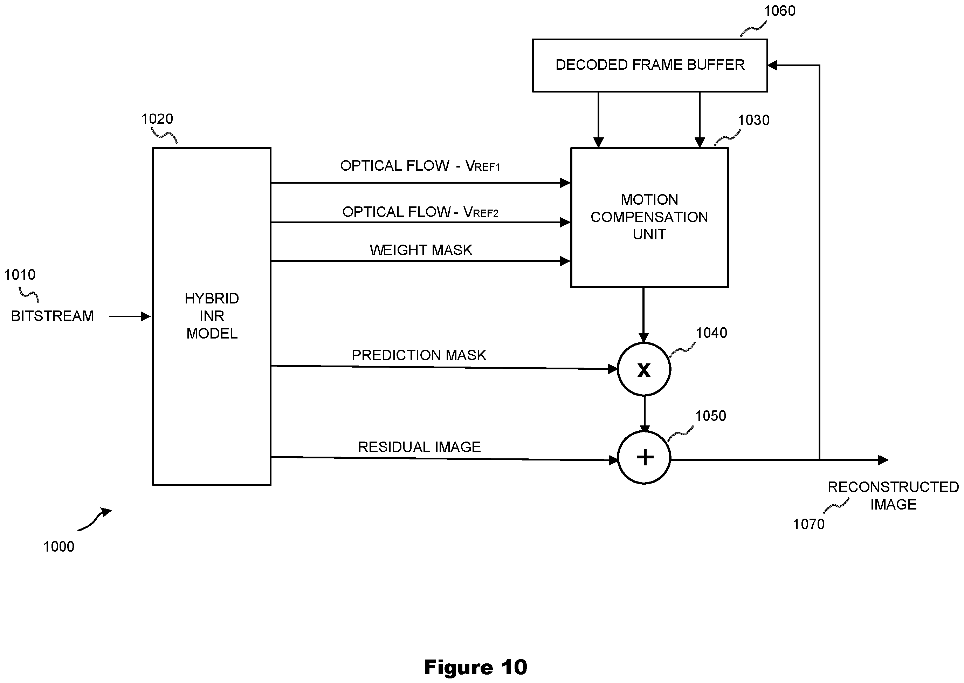

Principles of the predictive hybrid INR model proposed in Leguay are described next in reference to Figures 9 and 10. The operation of the predictive hybrid INR model is explained herein with respect to an image *x* of a video frame, however, *x* may represent other types of data (such as a surface or a volume) that can be associated with a frame. Note that latent variables representative of data regions (e.g., pixels) from a data frame (e.g., a video frame) referred to herein also as corresponding to that data frame.

**Figure 9** is a block diagram illustrating an example video encoder 900 applying a predictive hybrid INR model. The encoder 900 receives, as an input, latent variables 910 and outputs a bitstream 980. The encoder 900 includes a hybrid INR model 920, a motion compensation unit 930, a multiplier 940, an adder 950, and a decoded frame buffer 960. The hybrid INR model 920 generally operates (in a training mode) as the hybrid INR model described in reference to FIG. 6. However, in this case the hybrid INR model is trained to produce two optical flows, *v*_{*ref*1} and *v*_{*ref*2}*,* a weight mask β, a prediction mask ∝, and a residual image r. The optical flows represent the pixel-wise motion between respective reference frames (already reconstructed images 970, stored in the decoded frame buffer 960) and the current frame. And so, the motion compensation unit 930 can use these optical flows to generate a prediction, denoted by ***x̃***, of the currently coded image x, as follows: ${x}^{˜} = β ⋅ warp \left({\hat{x}}_{ref 1}, {v}_{ref 1}\right) + \left(1-β\right) ⋅ warp \left({\hat{x}}_{r ef 2}, {v}_{ref 2}\right) ,$ where *warp* is an operator that warps (i.e., spatially maps) an image into another image based on motion vectors given by an optical flow. Specifically, a first reference image, ***x̂***_{*ref*1}*,* is warped into a first prediction, ***x̃*₁** = *warp*(**x̂**_{*ref*1}*, v*_{*ref*1}) and a second reference image, ***x̂***_{*ref*2} is warped into a second prediction, ***x̃***₂ = *warp*(***x̂***_{*ref*2}, *v*_{*ref*2}). Using elementwise multiplication, denoted by "·", the two predictions are then blended by the mask *β*, yielding the prediction image ***x̃***. As illustrated in FIG. 9, the prediction image ***x̃*** (output of the motion compensation unit 930) is then corrected by the residual image r, as follows: $\hat{x} = r + ∝ ⋅ {x}^{˜} ,$ where, the prediction mask ∝ is a binary mask that can be used to mask out 940 a prediction pixel if it does not reliably predict the corresponding pixel in x. Adding 950 the masked prediction image, ∝· ***x̃***, to the residual image r produces the reconstructed image 970, ***x̂***.

Hence, the two optical flows, *v*_{*ref*1} and *v*_{*ref*2}*,* the weight mask *β*, the prediction mask ∝, and the residual image r can be learned by minimizing the coding cost expressed in equation (4), where *f**_{θ}***(*ẑ*) = ***x̂*** = **r**+∝· ***x̃***. Note that the predictive hybrid INR model, illustrated in FIG. 9, can be applied using only one reference image or any number of reference images available in the decoded frame buffer 960. In such a case equation (9) can be expressed as: ${x}^{˜} = {\sum }_{q = 1}^{Q} {β}_{q} ⋅ warp \left({\hat{x}}_{ref q}, {v}_{ref q}\right) ,$

Where, Q is the number of reference images used; where ${\sum }_{q = 1}^{Q} {β}_{q}$ is equal to an all-ones matrix. where *v*_{*ref*q} is the optical flow with respect to ***x̂***_{*ref*q}, that is, the qth reference image. In a variant, the weight mask *β*, the prediction mask ∝, or both can be removed from the predictive hybrid INR model.

**Figure 10** is a block diagram illustrating an example video decoder 1000 applying a predictive hybrid INR model. The decoder 1000 receives, as an input, a bitstream 1010 and outputs reconstructed images 1070. The decoder 1000 includes a hybrid INR model 1020, a motion compensation unit 1030, a multiplier 1040, an adder 1050, and a decoded frame buffer 1060. The hybrid INR model 1020 generally operates (in an inference mode) as the hybrid INR model described in reference to FIG. 7. However, in this case the hybrid INR model produces two optical flows, *v*_{*ref*1} and *v*_{*ref*2}*,* a weight mask *β*, a prediction mask ∝, and a residual image r. The optical flows represent the pixel-wise motion between respective reference frames (already reconstructed images 1070, stored in the decoded frame buffer 1060) and the current frame. And so, the motion compensation unit 1030 can use these optical flows to generate a prediction, denoted by ***x̃***, of the currently decoded image x, as expressed by equation (9). As illustrated in FIG. 10, the prediction image ***x̃*** (output of the motion compensation unit 1030) is then corrected by the residual image r, as shown by equation (10). Adding 1050 the masked prediction image, ∝· ***x̃***, to the residual image r produces the reconstructed image 1070, ***x̂***.

In general, entropy coding of the latent grids in hybrid INR is the same for the whole signal. However, in low-frequency parts of the signals, high resolution latent grids usually contain little to no information. Encoding those latent values leads to unnecessary rate increase and/or to unnecessary computation for decoding them. Explicitly signaling where some variables are zero reduces the bitrate but incurs extra overhead in signaling due to the necessity of sending corresponding information, for example as a mask or highest encoding grid levels.

Embodiments described hereafter have been designed with the foregoing in mind and propose a hybrid INR model that decreases the bit rate and the decoding complexity of low frequency part of a signal using feature-based INR methods. More particulary, it is proposed to reduce the unnecessary rate increase and/or decoding computation caused by higher resolution latent grids coding by automatically setting some values to a default value when some latents in a coarser grid latent is zero. Indeed, in hybrid INR, high resolution latent grids are often full of 0 or constant values in large areas. These trivial areas can be detected as early as the coarsest levels.

Several embodiments are described herein. In a first embodiment, the latent values of one level of the grid are automatically set to zero when the corresponding latent value in the coarser latent grid is zero. In a second embodiment, each latent level is associated with one most probable latent value, which is signaled by the encoder. The latent values of one level of the grid are then automatically set to the most probable value (for that level) when the corresponding latent value in the coarser latent grid is equal to the most probable latent value (for that level). In a third embodiment, latent values of one level of the grid are set to zero if the corresponding latent value as well as values in a neighborhood (e.g. above/below and left/right values) are all equal to zero in the coarser latent grid. This limits the application of the application of the procedure but may allow to better reconstruct border areas. We describe an encoding and a corresponding decoding procedure for hybrid-INR in general. The first and second embodiment can be combined with the third one. We also describe an embodiment with the COOL-CHIC algorithm.

The embodiments are described herein using an image as data to encode and decode. However, the architecture and methods apply similarly to other types of data such as 3D scenes, 3D objects, haptic textures, or other types of data.

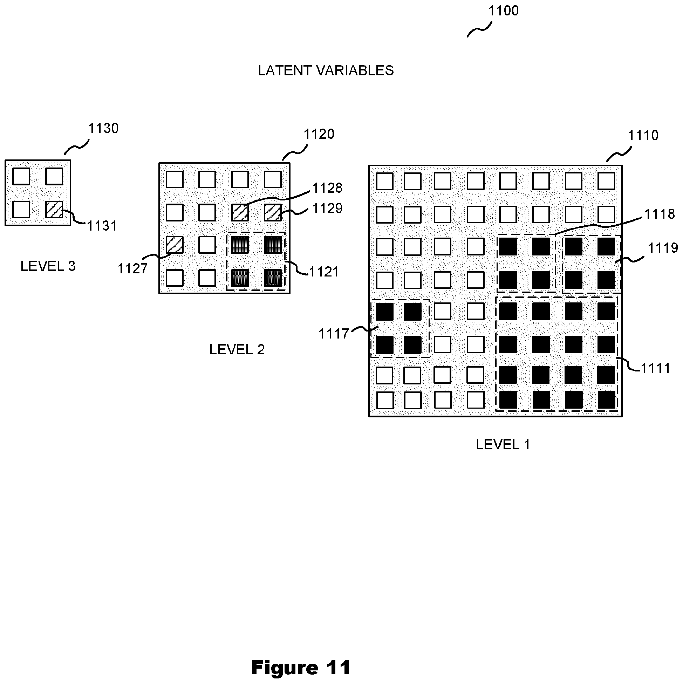

**Figure** 11 illustrates an example of 3-levels hierarchical grid of latent variables for a hybrid INR according to the first embodiment. This embodiment relies on constraining the value of latent values of a finer grid level to zero when the collocated value at a coarser grid level is zero, in order words propagating a zero value to corresponding (i.e. co-located) values of subsequent finer grid levels. Therefore, as soon as a latent value is zero, all collocated values in all higher levels (higher resolution) are set to zero, therefore saving bitrate and reducing the number of decoding operations. In this figure and the following figures, for the sake of readability of the drawings, an arbitrary number of three levels have been chosen to illustrate the proposed principles. In a more practical implementation, the number of levels is much higher, for example any number of levels between four and sixteen or even higher. A tradeoff may be chosen between the quality of the reconstruction and the computation resources required for the training process, reconstruction process and the quantity of parameters to be encoded. In the figure, a signal is encoded using a hybrid INR with three level of latent grids (1100) containing respectively 64, 16 and 4 latent values from fine to coarse, for respectively level 1 (1110), level 2 (1120) and level 3 (1110). In the coarser grid level (1130), one value (1131) is equal to zero, represented by a dashed square. This value is encoded and transmitted. However, the values located in the corresponding area (1121) in the second level are constrained to be 0. These values, represented by black squares in the figure, do not need to be encoded and transmitted. Furthermore, in the example of the figure, three additional latent values (1127, 1128, 1129) of the second level (1120) are also equal to zero. These values, represented by dashed squares in the figure, are encoded and transmitted. However, in the third level (1110), the values located in a corresponding area to a zero value in the second level are constrained to be zero (values 1117, 1118, 1119 represented by black squares in the figure). The values constrained to zero are also cascaded. As a result, in this examples, 16 values (1111) corresponding to the zero value in the first level and 12 values (1117, 1118, 1119) correspond to the zero transmitted in the second level will not be encoded and thus allow saving bitrate and further decoding operations. In this example, instead of transmitting (and decoding on the decoder side) 84 values (64+16+4) in total, the encoder only needs to encode and transmit 42 values (64 - 3x4 - 16 for the level 1, 16-4 for the level 2 and 4 for the level 3).

The first embodiment is based on the hypothesis that zero is the most frequent value in each latent. This is not systematically the case but has often been observed. In the second embodiment, a most frequent value different from zero is considered. In this case, for a latent level k, a most frequent latent value ${\hat{y}}_{k}^{MP}$ is determined. In embodiments, this most frequent value is obtained by the decoder, for example by processing values from previous frames or is signaled by the encoder in the bitstream and decoded by the decoder from the bitstream. In other embodiments, this most frequent value is pre-determined and does not need to be computed or transmitted. The latent values of one level of the grid k are then automatically set to ${\hat{y}}_{k}^{MP}$ when the corresponding latent value in the coarser latent grid *k +* 1 is equal to ${\hat{y}}_{k + 1}^{MP}$, or, in another embodiment, when that corresponding latent value is equal to ${\hat{y}}_{k}^{MP}$. In a variant, which of these two options is used may also be signaled. In other words, this second embodiment proposes to propagate a selected value that may be different from zero to corresponding (i.e. co-located) values of subsequent finer grid levels.

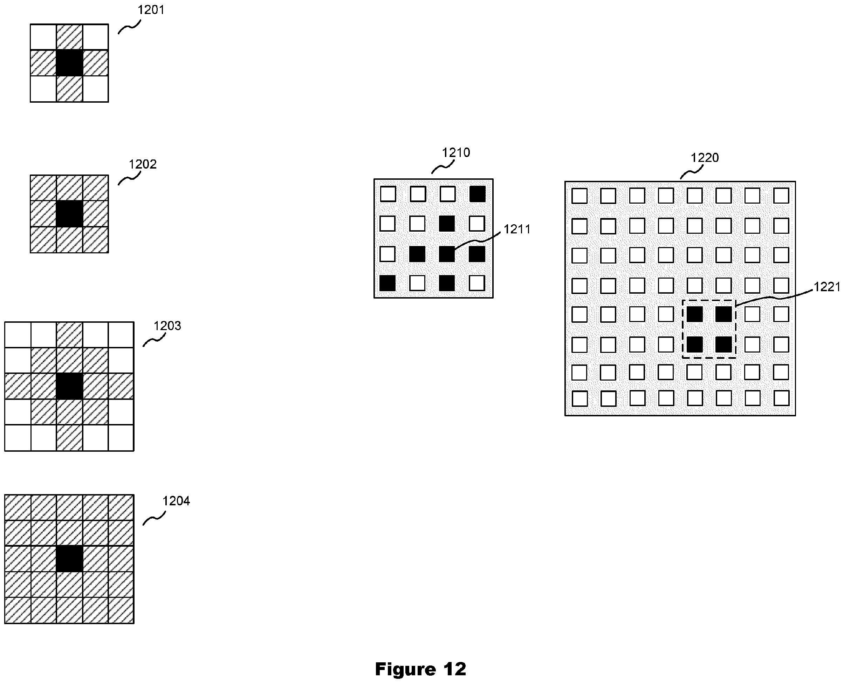

**Figure 12** illustrates examples of neighborhood and latent grids for a hybrid INR according to the third embodiment. This embodiment relies on constraining the value of latent values of the finer grid level to zero when the collocated value at a coarser grid level is zero and its neighborhood values are also zero. In other words, for a current value of a grid level, if the neighborhood of the collocated value at a coarser grid level contains a non-zero value, the zero value of the coarser grid level is not propagated to the current value. The shapes of neighborhood may be one of the shapes 1201, 1202, 1203 or 1204, where the central square represents a zero value, and the dashed squares represent the neighborhood values to be considered.

The elements 1210 and 1220 illustrate an example of propagation of the zero values according to the third embodiment in a simplistic two-level grid, with the element 1210 representing the coarse grid level and the element 1220 representing the fine grid level. Black squares represent zero values, and white squares represent values different from zero. In the case the shape of the neighborhood is the simplest one 1201, the only value for which the zero will be propagated is 1211 since its value is zero and all its neighborhood values, according to the shape 1201, are also zero values. Therefore, the zero value is propagated to all values of the corresponding elements 1221 of the fine grid level, resulting in zeroing four values. If one of these neighborhood values is different from zero, the zero value of the central square is not propagated to the finer grid level.

In the case the shape of the neighborhood is more constraining such as the shape 1202, no zero value will be propagated to the finer grid level since there is no zero value element for which all neighborhood values are also zero values. The same is true for the neighborhood shapes 1203 and 1204.

This neighborhood rule limits the application of the propagation procedure but may allow to better reconstruct border areas or areas where a latent is equal to zero but not all of its neighbors.

In a variant embodiment, the rule to set latent values to zero may be relaxed, so that for example it is enough that at least a certain percentage of values in the neighborhood of a zero value are equal to zero in order to propagate the zero value to the finer grid level. When applied to the element 1211 of figure 12, using a neighborhood shape according to element 1202 and a percentage of 40%, the zero value of 1211 would be propagated since the ratio of zero values of the neighborhood is 50%.

In a variant embodiment, the neighborhood shape and possibly the necessary percentage of values equal to 0 may be signaled by the encoder. In a variant embodiment, this signaling is performed globally. In a variant embodiment, this signaling is performed level-by-level, in other words, a percentage of zero values is associated with each grid level.

The second and third embodiments may be combined, so that if all (respectively, a sufficiently high percentage of) values in a neighborhood in the coarser level are all equal to the most probable value for that level, then the values in the finer level corresponding to the central sample are automatically set to the most probable value for that level.

Any of these embodiments may also be based on the level *k -* 1 rather than *k +* 1. This may also be an encoder choice that is signaled.

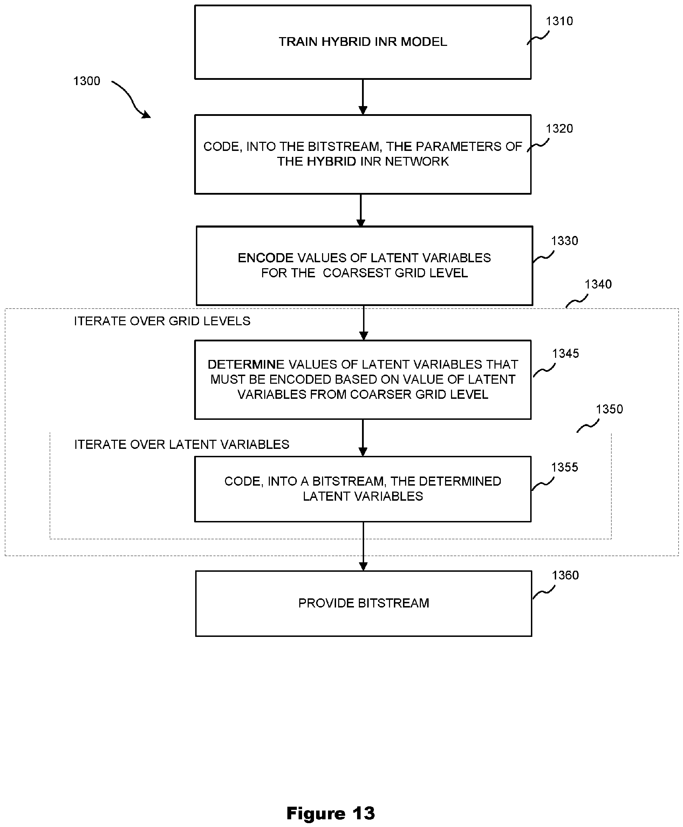

**Figure** 13 illustrates an example process for encoding data based on a hybrid INR model using latent value propagation according to embodiments. The encoding process 1300 is for example implemented by a processor 110 of a device 100 of figure 1 or an encoder 900 of Figure 9.

In step 1310, the processor performs a training of the Hybrid INR model is trained. This can be achieved using different approaches. In a first approach, the model may be trained incrementally, from 1 to K grid levels, by iteratively incrementing the number of grid levels by 1. So, to obtain an hybrid INR model with *K* layers of latent variables: *ŷ* = {*ŷₖ , k = 0: (K* - 1)}, where each layer *ŷₖ* is of width *W*/*2^{k}* and of height *H*/2*^{k}*, the model is first trained with a single layer *ŷ*_{*K*-1} of width *W*/2^{*K*-1} and of height *H*/2^{*K*-1} . This reduced hybrid INR model is trained, including the synthesis network, the latent values and the autoregressive model (or other model) yielding a probability distribution over the latent values. The number of levels of latent variable of the model is then gradually increased by 1 until the final model where *l = K* is trained. At each step, the model includes *l* layers of latent variables: *ŷ* = {*ŷₖ* , *k = K - l*: *(K - 1)},* where each layer *ŷₖ* is of width *W* /2*^{k}* and of height *H* /2*^{k}.* The new grid at level *K - l* is constrained as follows: *ŷ*_{*ij*(*K-l*)} is constrained to be 0 if ${\hat{y}}_{\left(\frac{i}{2}\right) \left(\frac{j}{2}\right) \left(K-l+1\right)}$ is equal to 0. In this context, $\frac{i}{2}$ and $\frac{j}{2}$ denotes a floor division. This new hybrid INR model is trained, including the synthesis network, the unconstrained latent values and the autoregressive model (or other model) yielding a probability distribution over the latent values. It can be trained from scratch or be initialized by reusing the values of some or all the elements of the previous model. Besides these elements, the training procedure for each model is the same as usual.

In another approach, the model may be trained at once, for example by modifying the loss to enforce the sparsity constrain. To do so, both the rate and the distortion loss must be modified. The optimization problem can be modified as follows:
Distortion loss: each latent is modified as follows: for k ∈ {K - 2, ...,0}: *ŷ'ᵢⱼₖ* = ${\hat{y}}_{ijk} \left(1-δ\left({\hat{y}}_{\frac{i}{2} \frac{j}{2} \left(k+1\right)}\right)\right)$, where *δ* is the Dirac function and *ŷ'ᵢⱼₖ* = *ŷᵢⱼₖ for k = K -* 1. The latents *ŷ'* are upsampled to obtain the upsampled latent variables *ẑ'*, for example by a factor of 2*^{k}* (using any interpolation method). The distortion loss is then *D*(*x*, *f_{θ}*(*ẑ'*)).

Rate loss: similarly, the rate loss is modified to discard the weight of the latent values that are constrained to 0, as these will not be transmitted. The context $c {′}_{ijk}^{s}$ used by the PP network may be ${c}_{ijk}^{s}$ or may contain the values *ŷ'ᵢⱼₖ* rather than *ŷᵢⱼₖ* . $R \left(\hat{y}, θ, ψ\right) = {\sum }_{ijk} \left(1-δ\left({\hat{y}}_{\frac{i}{2} \frac{j}{2} \left(k+1\right)}\right)\right) {log}_{2} {p}_{ψ} \left({\hat{y}}_{ijk}\left|c{′}_{ijk}^{s}\right.\right) .$

Apart from these differences, this is the same procedure as training an hybrid INR model. Typically, the full INR model is trained together, including the synthesis network, the latent values and the autoregressive model (or other model) yielding a probability distribution over the latent values.

In some approaches, the optimization problem may be relaxed by using another function $d \left({\hat{y}}_{\frac{i}{2} \frac{j}{2} \left(k+1\right)}\right)$ to modify the latent during reconstruction and to weight the element of the rate loss: $for k ∈ \left\{0,…,K-2\right\} : \hat{y} {′}_{ijk} = {\hat{y}}_{ijk} \left(1-d\left({\hat{y}}_{\frac{i}{2} \frac{j}{2} \left(k+1\right)}\right)\right)$ $R \left(\hat{y}, θ, ψ\right) = {\sum }_{ijk} \left(1-δ\left({\hat{y}}_{\frac{i}{2} \frac{j}{2} \left(k+1\right)}\right)\right) {log}_{2} {p}_{ψ} \left({\hat{y}}_{ijk}\left|c{′}_{ijk}^{s}\right.\right) .$

The goal of the function $d \left({\hat{y}}_{\frac{i}{2} \frac{j}{2} \left(k+1\right)}\right)$ is to approximate the Dirac function to make the optimization problem easier. Many different approximations can be used, including Gaussian functions, exponential functions, sinc function, rectangular functions or normalized exponential functions.

In some approaches, the function $\left(1-δ\left({\hat{y}}_{\frac{i}{2} \frac{j}{2} \left(k+1\right)}\right)\right)$ may be approximated instead.

Besides this difference, the training procedure may be the same as training an hybrid INR model. Typically, the full INR model is trained together, including the synthesis network, the latent values and the autoregressive model (or other model) yielding a probability distribution over the latent values. The function $d \left({\hat{y}}_{\frac{i}{2} \frac{j}{2} \left(k+1\right)}\right)$ may also change during training, for example to tighten or relax the approximation.

In another approach, the model is first trained without any constrain and in a second stage the constrains are forced onto the model. This can for example be done by modifying all latent variables $\hat{y} {′}_{ijk} = {\hat{y}}_{ijk} \left(1-δ\left({\hat{y}}_{\frac{i}{2} \frac{j}{2} \left(k+1\right)}\right)\right)$. It may also be done by modifying all latent variables ${\hat{y}}_{\frac{i}{2} \frac{j}{2} \left(k+1\right)}$ such that ${\hat{y}}_{\frac{i}{2} \frac{j}{2} \left(k+1\right)} \neq 0$ if *ŷᵢⱼₖ* ≠ 0 for any *i,j, k.* A combination of both is also possible.

In step 1320, the processor encodes parameters of the hybrid INR model in video data, for example in a bitstream. As seen above, the Hybrid INR model may comprise a probability model (PP Network), an INR synthesis network and may include an upsampling model. If the model involves a neural network, compressing is for example done by a neural compression codec such as Neural Network Coding (NNC)/ ISO/IEC 15938-17 or MPEG-7 part 17 or simply by quantizing the weights and/or pruning some neurons from the network.

In step 1330, the processor encodes values of latent variables for the coarsest grid level. The encoding of the latent values is done based on the discrete probability distribution over the quantized latent features given by the autoregressive model (or another model). This may involve quantization of the latent features if this was not done before.

**In** step 1340, the processor iterates over subsequent grid levels (i.e. the grid levels that are finer than the coarsest grid level).

In step 1345, for an iterated grid level, the processor determines the latent values (i.e. values of the latent variables) that must be encoded in the bitstream according to embodiments described above. In other words, in this step, the processor determines the values that are propagated from a coarser grid level to a finer grid level. These values are therefore not encoded at the finer grid level.

According to the first embodiment, only the values *ŷᵢⱼₖ* such that (1 - $δ \left.\left({\hat{y}}_{\frac{i}{2} \frac{j}{2} \left(k+1\right)}\right)\right) \neq 0$ are encoded in the bitstream. Other values *ŷᵢⱼₖ* will be propagated (set to 0) by the decoder. If an approximation $d \left({\hat{y}}_{\frac{i}{2} \frac{j}{2} \left(k+1\right)}\right)$ is used, then only the values *ŷᵢⱼₖ* such that $\left(1-d\left({\hat{y}}_{\frac{i}{2} \frac{j}{2} \left(k+1\right)}\right)\right) > ϵ$ are encoded.

According to the second embodiment, only the values *ŷᵢⱼₖ* such that (1 - $δ \left.\left({\hat{y}}_{\frac{i}{2} \frac{j}{2} \left(k+1\right)}-{\hat{y}}_{k}^{MP}\right)\right) \neq 0$ are encoded in the bitstream. Other values *ŷᵢⱼₖ* will be propagated (set to ${\hat{y}}_{k}^{MP}$) by the decoder. If an approximation $d \left({\hat{y}}_{\frac{i}{2} \frac{j}{2} \left(k+1\right)}\right)$ is used, then only the values *ŷᵢⱼₖ* such that $\left(1-d\left({\hat{y}}_{\frac{i}{2} \frac{j}{2} \left(k+1\right)}-{\hat{y}}_{k}^{MP}\right)\right) > ϵ$ are encoded. In some variants, *ε* may be optimized by the encoder and transmitted. In addition, according to the third embodiment, this step may be subject to neighborhood constraints as described above.

In step 1350, the processor iterates over the latent variables and encodes, in step 1355, the values of the latent variables determined to be encoded in the step 1345. The encoding is done for example using an entropy coder. The encoding of the latent values is done based on the discrete probability distribution over the quantized latent features given by the autoregressive model (or another model). This may involve quantization of the latent features if this was not done before.

In some embodiments, the parameters of the function $d \left({\hat{y}}_{\frac{i}{2} \frac{j}{2} \left(k+1\right)}\right)$ or the type of function used may be optimized by the encoder and transmitted as well.

In some embodiments and as discussed above another value than 0 may be used to constrain the values (i.e. propagated to finer grid levels). This value may also be level specific. This default value may also be optimized or chosen by the encoder and included in the bitstream.

In some embodiments, the encoder may choose to activate the constrain only for some grid levels. In that case, the identifier for these levels must be encoded and transmitted.

In step 1360, the processor provides the encoded bitstream comprising at least the parameters of the INR synthesis network and values (i.e. non-propagated) of the latent variables of the plurality of grid levels . In addition, parameters of the PP network and of the upsampling network may also be encoded.

The encoding method can be summarized as following. The encoding method comprises training an implicit neural representation network model, encoding, in video data, parameters of the implicit neural representation network, encoding, in video data, values of latent variables of a coarsest grid level of a hierarchical grid of latent variables for the implicit neural representation network, iterating over grid levels of finer levels than the coarsest grid level and, for an iterated grid level, when a difference between a value of a corresponding latent variable of the coarser grid level and the most frequent value is greater than or equal to a threshold, determine that values of the corresponding latent variables of the iterated grid level must be encoded and encoding, in video data, values of latent variables of the iterated grid level, and produce a video data comprising the parameters of the implicit neural representation network and the determined values of the latent variables for the grid levels.

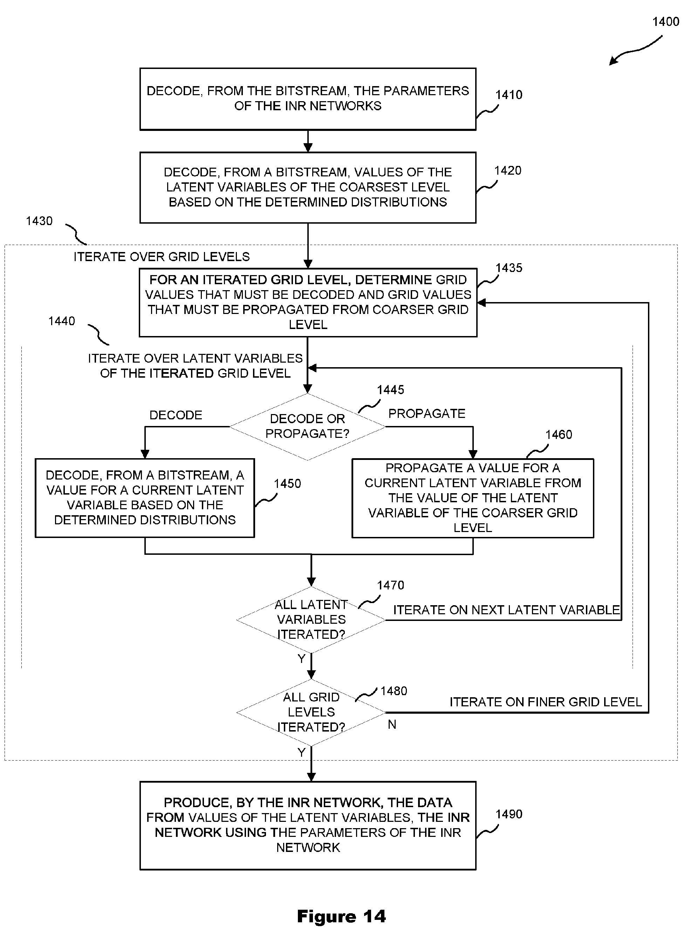

**Figure 14** illustrates an example process for decoding data based on a hybrid INR model using latent value propagation according to embodiments. The decoding process 1400 is for example implemented by a processor 110 of a device 100 of figure 1 or a decoder 1000 of Figure 10.

In step 1410, the processor obtains the parameters of the neural networks of the hybrid INR model. The parameters may be obtained (i.e. decoded) from video data, for example from a bitstream or be reused from another frame. These parameters may for example be the parameters of an auto-regressive or other probability model or of an upsampling model.

Latent values are decoded from the bitstream according to the parameters, iteratively, grid level by grid level, starting from the coarser level K - 1, until all latent variables are decoded. In step 1420, the first grid level is decoded as usual. This is for example done using the auto-regressive or other probability model and an entropy decoder as in any hybrid INR method and described above. After decoding the first (coarsest) level, the processor iterates on the subsequent levels (starting from level K - 2) in step 1430, until all grid levels have been treated (test in step 1480). The successive levels are decoded iteratively as follows:
In step 1435, for a current grid level k, the processor determines values of the latent variables that must be decoded and values of the latent variables that are propagated from hierarchically corresponding latent variables of the coarser level. Indeed, as seen above, some of the values are not encoded for a grid level but are propagated from a coarser grid level. These values are therefore not encoded at the finer grid level.

According to the first embodiment, only the values *ŷᵢⱼₖ* such that (1 - $\left.δ\left({\hat{y}}_{\frac{i}{2} \frac{j}{2} \left(k+1\right)}\right)\right) \neq 0$ are encoded in the bitstream and must be decoded. Other values *ŷᵢⱼₖ* will be propagated (set to 0) by the decoder. If an approximation $d \left({\hat{y}}_{\frac{i}{2} \frac{j}{2} \left(k+1\right)}\right)$ is used, then only the values *ŷᵢⱼₖ* such that $\left(1-d\left({\hat{y}}_{\frac{i}{2} \frac{j}{2} \left(k+1\right)}\right)\right) > ϵ$ are encoded in the bitstream and must be decoded.

According to the second embodiment, only the values *ŷᵢⱼₖ* such that (1 - $\left.δ\left({\hat{y}}_{\frac{i}{2} \frac{j}{2} \left(k+1\right)}-{\hat{y}}_{k}^{MP}\right)\right) \neq 0$ are encoded in the bitstream and must be decoded. Other values *ŷᵢⱼₖ* will be propagated (set to ${\hat{y}}_{k}^{MP}$) by the decoder. If an approximation $d \left({\hat{y}}_{\frac{i}{2} \frac{j}{2} \left(k+1\right)}\right)$ is used, then only the values *ŷᵢⱼₖ* such that $\left(1-d\left({\hat{y}}_{\frac{i}{2} \frac{j}{2} \left(k+1\right)}-{\hat{y}}_{k}^{MP}\right)\right) > ϵ$ are encoded in the bitstream and must be decoded. In some variants, *ε* may be optimized by the encoder and transmitted. In addition, according to the third embodiment, this step may be subject to neighborhood constraints as described above.

In step 1440, the processor iterates on latent variables for the current grid level and, in step 1445, test whether a current variable should be decoded or propagated. In the first case, the processor jumps to step 1450 and decodes a value for the current latent variable from the bitstream. The value is for example decoded based on the determined distributions, for example using the auto-regressive or other probability model and an entropy decoder as in any hybrid INR method and described above. In some variants, the parameters of the function $d \left({\hat{y}}_{\frac{i}{2} \frac{j}{2} \left(k+1\right)}\right)$ or the type of function used may be decoded as well. In the second embodiment, a threshold value *ε* may be decoded as well. In the latter case of the test of step 1445, the processor jumps to step 1460 and propagates a value for the current latent variable from the value of the hierarchically corresponding latent variable of the coarser grid level. For example, referring to figure 12, values for the latent variable composing the element 1221 are propagated (i.e., copied) from the value of the corresponding latent variable 1211.

In step 1470, the processor checks whether the iteration was performed over all latent variables of a current grid level. When this is not the case, the processor jumps to step 1445 to iterate the process on the next latent variable. When all latent variables of a current grid level have been iterated, the processor jumps to step 1480 and checks whether the iteration was performed over all grid levels. When this is not the case, the processor jumps to step 1435 to iterate the process on the next grid level. When all grid levels have been iterated, the processor jumps to step 1490.

In step 1490, the processor produces the reconstructed data. This may be done by decoding the signal following the usual process for hybrid INR models using the decoded latent features. The decoded features may be upsampled. This may require obtaining an upsampling network from the bitstream. The synthesis INR network is obtained and configured. This is typically done by decoding it from the bitstream, but it may already be available to the decoder, for example because it has been used for another part of the signal or is transmitted separately. Parameters of the synthesis INR network may also be transmitted with the video data, as described in figure 6. The upsampled features are used by the synthesis network to decode the signal and reconstruct the data. For 2D images or video, the output of the synthesis network would typically be pixel colors allowing to reconstruct an image or video. For 3D scene, the output would typically be color and density of a voxel. For a 3D surface (e.g. hologram), it may be a signed or unsigned distance to the surface.
The decoding method can be summarized as following. The decoding method comprises decoding, from video data, values of latent variables of a coarsest grid level of a hierarchical grid of latent variables for an implicit neural representation network, iterating over grid levels of finer levels than the coarsest grid level and, for an iterated grid level, iterating over latent variables of the iterated grid level, and for a latent variable of the iterated level, when a difference between a value of a latent variable of a coarser grid level that hierarchically corresponds to the iterated latent variable and a most frequent value is smaller than or equal to a threshold value, propagating the most frequent value to the iterated latent variable of the iterated grid level, when the difference between the value of the latent variable of the coarser grid level that hierarchically corresponds to the iterated latent variable and the most frequent value is greater than the threshold value, decoding from video data values of the corresponding latent variables of the iterated grid level, and producing a reconstructed data using the implicit neural representation network and determined values of the latent variables.

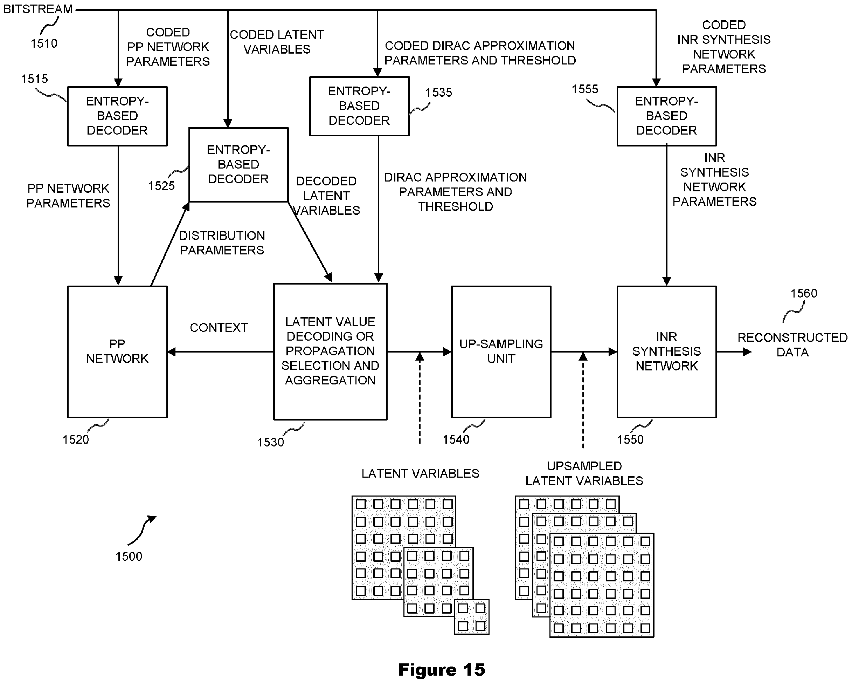

**Figure 15** illustrates an example process for decoding data based on a hybrid INR model using zero value propagation according to an embodiment based on the COOL-CHIC algorithm. The decoder 1500 includes a PP network 1520, an up-sampling unit 1540, an INR synthesis network 1550, and entropy-based decoders 1515, 1525, 1535, 1555 and operates on a bitstream (e.g. video data) 1510. The optional entropy-based decoder 1535 decodes the parameters of the function $d \left({\hat{y}}_{\frac{i}{2} \frac{j}{2} \left(k+1\right)}\right)$ and/or the type of function and/or threshold value, if they are not known to the decoder. These parameters are used by a module 1530 to identify whether a value of a latent variable is propagated from a coarser grid level or is transmitted (and thus must be decoded). Other latent values are set to a default value, e.g. 0. For the values that must be decoded, the PP network 1520 is queried with a context composed of already obtained latent values to produce the distribution parameters of the currently decoded latent variable (as further described in reference to Figure 8). The PP network 1520 operates based on learned PP network parameters ψ, determined during the training of the PP network 620 of figure 6. The entropy-based decoder 1515 decodes these PP network parameters from the bitstream 1510. Based on the produced 1520 distribution parameters, the entropy-based decoder 1525 decodes the identified latent variables from the bitstream 1510. These decoded latent variables are then provided to the latent value decoding selection and aggregation module 1530 to be set at the right location in the grid of latent values. The decoded latent variables are then upsampled by the up-sampling unit 1540 (as performed by the up-sampling unit 640 at the encoder 600 of figure 6). Fed by the up-sampled latent variables, the INR synthesis network 1550 reconstructs the data 1560 (e.g., a reconstructed image of a video frame) it is trained to synthesize based on the INR synthesis network parameters, decoded from the bitstream 1510 by the entropy-based decoder 1555.

In a variant embodiment, the signal may be decoded part by part using the grids decoded for each part. The signal is then reconstructed by concatenating the signal part together, based on the position of the different parts.

The decoding method can be summarized as following. The decoding method comprises decoding, from video data, values of latent variables of the coarsest grid level of a hierarchical grid of latent variables for an implicit neural representation network, iterating over grid levels of finer levels than the coarsest grid level and, for an iterated grid level, iterating over latent variables of the iterated grid level, and for a latent variable of the iterated level, when a difference between value of a latent variable of the coarser grid level that hierarchically corresponds to the iterated latent variable and a most frequent value is smaller than a threshold value, propagate the most frequent value to the corresponding latent variables of the iterated grid level, when a value of a latent variable of the coarser grid level is not equal to the most frequent value, decode from video data values of the corresponding latent variables of the iterated grid level, and produce a reconstructed data using the implicit neural representation network and determined values of the latent variables .

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "map", "frame", "slice" and "tiles" may be used interchangeably. Usually, but not necessarily, the term "reconstructed" is used at the encoder side while "decoded" is used at the decoder side. The term compressed represents the result of an encoding step followed by a decoding step.

In the present application, the terms "INR network synthesis" and "INR Network" may be used interchangeably.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types.

## Claims

1. A decoding method comprising:
- decoding, from video data, values of latent variables of a coarsest grid level of a hierarchical grid of latent variables for an implicit neural representation network;
- iterating over grid levels of finer levels than the coarsest grid level and, for an iterated grid level, iterating over latent variables of the iterated grid level, and for a latent variable of the iterated level:
- when a difference between a value of a latent variable of a coarser grid level that hierarchically corresponds to the iterated latent variable and a most frequent value is smaller than or equal to a threshold value, propagating the most frequent value to the iterated latent variable of the iterated grid level;
- when the difference between the value of the latent variable of the coarser grid level that hierarchically corresponds to the iterated latent variable and the most frequent value is greater than the threshold value, decoding from video data values of the corresponding latent variables of the iterated grid level; and
- producing a reconstructed data using the implicit neural representation network and determined values of the latent variables.

2. The method of claim 1 further comprising obtaining, from video data, parameters for configuring the implicit neural representation network and configuring the implicit neural representation network based on the obtained parameters.

3. The method of any of claim 1 or 2, wherein the propagation is further constrained to having, for multiple latent variables of the coarser grid level that hierarchically corresponds to the iterated latent variable, a difference between value of a latent variables and a most frequent value that is smaller than a threshold value.

4. An encoding method comprising:
- training an implicit neural representation network model;
- encoding, in video data, parameters of the implicit neural representation network;
- encoding, in video data, values of latent variables of a coarsest grid level of a hierarchical grid of latent variables for the implicit neural representation network;
- iterating over grid levels of finer levels than the coarsest grid level and, for an iterated grid level:
- when a difference between a value of a hierarchically corresponding latent variable of a coarser grid level and a most frequent value is greater than a threshold, determining that values of the corresponding latent variables of the iterated grid level must be encoded and encoding, in video data, values of latent variables of the iterated grid level; and
- producing video data comprising the parameters of the implicit neural representation network and the determined values of the latent variables for the grid levels.

5. The method of any of claims 1 to 4, wherein the threshold is zero.

6. The method of any of claims 1 to 5, wherein the most frequent value is zero.

7. The method of any of claims 1 to 5, wherein the most frequent value is signaled in the video data.

8. The method of any of claims 1 to 7, wherein the most frequent value is signaled for each grid level.

9. An apparatus comprising a processor configured to:
- decode, from video data, values of latent variables of a coarsest grid level of a hierarchical grid of latent variables for an implicit neural representation network;
- iterate over grid levels of finer levels than the coarsest grid level and, for an iterated grid level, iterate over latent variables of the iterated grid level, and for a latent variable of the iterated level:
- when a difference between a value of a latent variable of a coarser grid level that hierarchically corresponds to the iterated latent variable and a most frequent value is smaller than or equal to a threshold value, propagate the most frequent value to the iterated latent variable of the iterated grid level;
- when the difference between the value of the latent variable of the coarser grid level that hierarchically corresponds to the iterated latent variable and the most frequent value is greater than a threshold value, decode from video data values of the corresponding latent variables of the iterated grid level; and
- produce a reconstructed data using the implicit neural representation network and determined values of the latent variables.

10. The apparatus of claim 9, further comprising obtaining, from video data, parameters for configuring the implicit neural representation network and configuring the implicit neural representation network based on the obtained parameters.

11. The apparatus of any of claim 9 or 10, wherein the propagation is further constrained to having, for multiple latent variables of the coarser grid level that hierarchically corresponds to the iterated latent variable, a difference between value of a latent variables and a most frequent value that is smaller than a threshold value.

12. An apparatus comprising a processor configured to:
- train an implicit neural representation network model;
- encode, in video data, parameters of the implicit neural representation network;
- encode, in video data, values of latent variables of a coarsest grid level of a hierarchical grid of latent variables for the implicit neural representation network;
- iterate over grid levels of finer levels than the coarsest grid level and, for an iterated grid level:
- when a difference between a value of a hierarchically corresponding latent variable of a coarser grid level and a most frequent value is greater than a threshold, determine that values of the corresponding latent variables of the iterated grid level must be encoded and encode, in video data, values of latent variables of the iterated grid level; and
- produce video data comprising the parameters of the implicit neural representation network and the determined values of the latent variables for the grid levels.

13. The apparatus of any of claims 9 to 12, wherein the threshold is zero.

14. The apparatus of any of claims 9 to 13, wherein the most frequent value is zero.

15. A non-transitory computer readable medium storing program code instructions for implementing the method according to any of claims 1 to 8 when executed by a processor.
